# EUROPEAN PATENT APPLICATION

(11) **EP 3 780 738 A1**
(43) Date of publication of application: **17.02.2021**
(21) Application number: 20189081.1
(22) Date of filing: 03.08.2020
(51) Int. Cl.: H04W 36/08, H04W 84/04

(54) **ASSOCIATING IAB MT TO IAB DU AT HANDOVER-TARGET GNB**

(30) Priority: 16.08.2019 US 201962888165 P
(71) Applicant: Nokia Solutions and Networks Oy, 02610 Espoo (FI)
(72) Inventor: KOSKINEN, Henri Markus, 02600 Espoo (FI); MALKAMÄKI, Esa, 02130 Espoo (FI)
(74) Representative: Nokia EPO representatives

(57) **Abstract**

According to an embodiment, a method may include receiving, by a target network entity, at least one message from an integrated access and backhaul node. The method may further include receiving at least one handover request. The method may further include associating, based on the at least one message and the at least one handover request, by the target network entity, at least one mobile termination of at least one integrated access and backhaul node with at least one distributed unit of the at least one integrated access and backhaul node.

## Description

### BACKGROUND:

### Field:

Various communication systems may benefit from improved handover of an integrated access and backhaul node.

### Description of the Related Art:

Under 3rd Generation Partnership Project (3GPP) new radio (NR) Release (Rel)-16 integrated access and backhaul (IAB), network-controlled topology adaptation is based upon handover procedures. In addition, 3GPP Rel-17 may include mobile IAB nodes.

### BRIEF DESCRIPTION OF THE DRAWINGS:

For proper understanding of this disclosure, reference should be made to the accompanying drawings, wherein:
FIG. 1 illustrates an example of a signaling diagram according to certain embodiments.
FIG. 2 illustrates an example of a method that may be performed by a network entity according to certain embodiments.
FIG. 3 illustrates an example of another method that may be performed by a network entity according to certain embodiments.
FIG. 4 illustrates an example of another method that may be performed by a network entity according to certain embodiments.
FIG. 5 illustrates an example of a system architecture according to certain embodiments.

### SUMMARY

According some aspects, there is provided the subject matter of the independent claims. Some further aspects are defined in the dependent claims. The embodiments that do not fall under the scope of the claims are to be interpreted as examples useful for understanding the disclosure.

In a first aspect thereof the exemplary embodiments of this invention provide an apparatus for a source network node, the apparatus comprising means for transmitting at least one command to at least one integrated access and backhaul node wherein the at least one command instructs the at least one integrated access and backhaul node to set up at least one F1 interface with a target network entity; and means for transmitting at least one handover request to the target network entity to handover the integrated access and backhaul node to the target network entity.

In a further aspect thereof the exemplary embodiments of this invention provide an apparatus for a target network entity, the apparatus comprising means for receiving at least one message from an integrated access and backhaul node; means for receiving at least one handover request from a source network entity; and means for associating, based on the at least one message and the at least one handover request, at least one mobile termination of at least one integrated access and backhaul node with at least one distributed unit of the at least one integrated access and backhaul node.

In another aspect thereof the exemplary embodiments of this invention provide an apparatus for an integrated access and backhaul node, the apparatus comprising means for receiving at least one command wherein the at least one command causes the apparatus to set up at least one F1 interface with a target network entity;
means for transmitting at least one set up message addressed to the target network entity to set up the F1 interface; and
means for receiving at least one set up response from the target network entity.

### DETAILED DESCRIPTION:

IAB nodes provide wireless relaying for NR access through backhauling, where a relaying node may be referred to as an IAB node. The terminating node for NR backhauling on the network side may be referred to as an IAB-donor network entity, which may be a network entity such as a next generation network entity (gNB), with additional functionality to support IAB. Backhauling may be performed in a single or multiple hops.

IAB-nodes may support gNB-distributed unit (DU) functionality to terminate an NR access interface between UEs and IAB-nodes, as well as to support F1 protocols to the gNB-CU on the IAB-donor. A neighbor IAB node on the DU's NR access interface may be referred to as a child node. The IAB-node may also support the NR Uu radio interface, referred to as mobile termination (MT) functionality, which may connect to the DU of another IAB-node or the IAB-donor. Furthermore, the IAB-node may connect to the gNB-centralized unit (CU) on the IAB-donor via a radio resource connection (RRC), where the neighbor node on the mobile termination's NR

Uu radio interface may be referred to as a parent node.
When the donor gNB of an IAB-node changes due to mobility or other reasons, an F1 interface may need to be set up between the IAB node and the target gNB. Since a F1-control plane (C) does not support mobility, some techniques with IAB-node mobility may include the IAB node hosting one logical DU with an F1 interface to the handover-source gNB and another logical DU with an F1 interface to a target gNB. Although an F1 interface with the target gNB may be set up before or after the handover of the IAB node, setting it up before handover may avoid some potential of delay in the overall procedure. This may occur over a concatenation of the IAB node's radio backhaul to the source gNB's DU and internet protocol (IP) routing between the source gNB-DU and the target gNB-CU.

The logical DU interfacing with the target gNB may set up at least one new radio cell with at least one parameter, for example, physical cell identity (PCI) and NR cell global identity (CGI) configured by the target gNB. For example, the PCI configured by the source gNB may not be suitable for the target gNB. Thus, after the handover of the IAB node, UEs and/or child IAB nodes served by the IAB node may need to be promptly handed over from old radio cells provided by the IAB node and configured by the source gNB to the new radio cells provided by the other logical DU configured by the target gNB.

Certain embodiments described herein may have various benefits and/or advantages. For example, certain embodiments may enable an inter-gNB handover of an IAB node and association between IAB MT and IAB DU at a target gNB. For example, certain embodiments may inform the target gNB when to take a peer DU functionality, that is setting up an F1 interface to the target gNB, into active use with active radio cells serving UEs. In addition, since handover procedures may be defined for a mobile-termination function, after the MT function of the IAB node is handed over to the target gNB, certain embodiments may enable the target gNB to associate the MT function of the IAB node with the F1 interface set up with the IAB node DU function. Thus, certain embodiments are directed to improvements in computer-related technology.

For setting up an F1 connection with a target gNB, a source gNB may indicate to an IAB node the source gNB's global NG-RAN node ID and/or the UE XnAP ID that the source gNB associated with the IAB MT on the Xn interface toward the target gNB. The IAB node may indicate these parameters to the target gNB as part of the F1 setup procedure with the target gNB. The indication may inform the target gNB that the associated DU is not to enter active use yet, or alternatively, may use a specific-purpose indication, such as a single bit, in an F1AP setup request from the IAB node.

In an XnAP handover request, the source gNB may identify the IAB MT to be handed over using a UE XnAP ID that the source gNB has assigned to the IAB MT. Based on the earlier Xn setup procedure notifying the target gNB of the global NG-RAN node ID of the source gNB, the IAB MT identified in the handover request may be associated with the IAB DU which sets up the F1 interface.

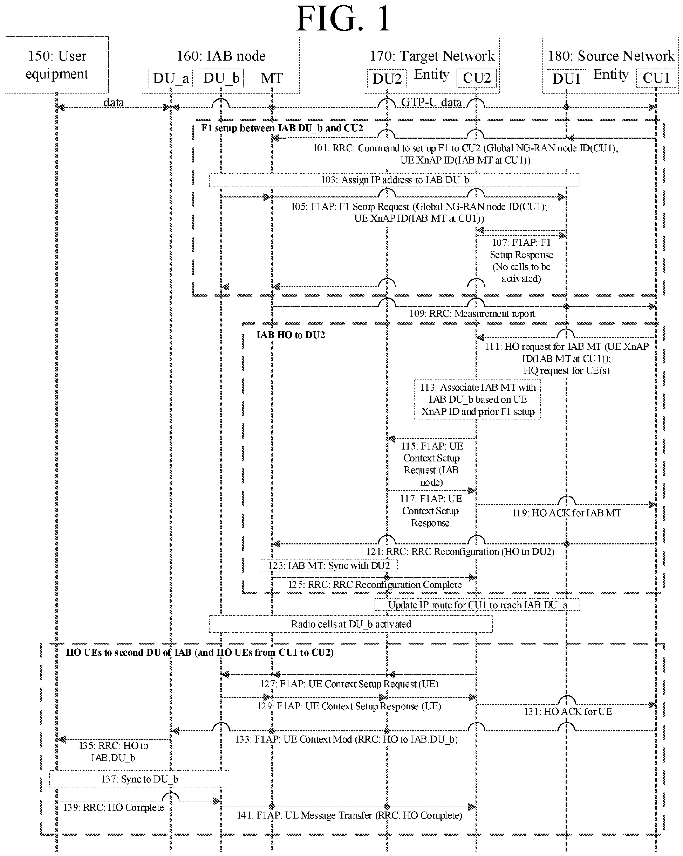

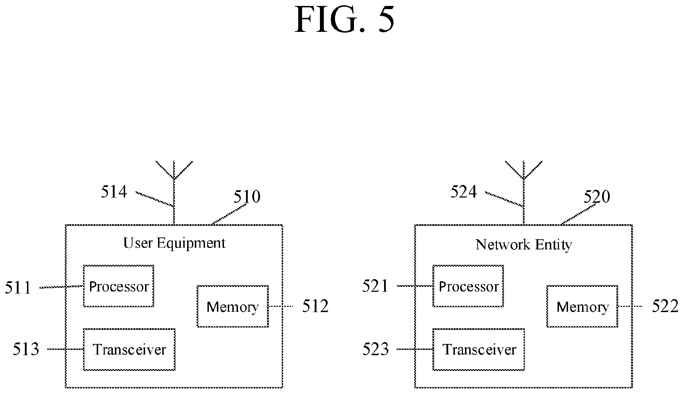

FIG. 1 illustrates an example of a signaling diagram showing various communications between UE 150, IAB node 160, target NE 170, and source NE 180. UE 150 may be similar to UE 510, while IAB node 160, target NE 170, and/or source NE 180 may be similar to NE 520, both illustrated in FIG. 5. Furthermore, UE 150, IAB node 160, and source NE 180 may be in communication via at least one existing connection, for example, at least one general packet radio service tunneling protocol - user plane (GTP-U) connection.

In step 101, source NE 180 may transmit at least one radio resource control (RRC) command to IAB node 160 MT function. For example, the at least one RRC command may be transmitted by at least one centralized unit (CU) of source NE 180, and may be transmitted through at least one distributed unit (DU) of source NE 180. Additionally or alternatively, the at least one RRC command may be received by at least one mobile termination (MT) of IAB node 160. In some embodiments, the at least one RRC command may comprise one or more of at least one global next generation-radio access network (NG-RAN) node identification (ID) associated with the at least one CU of source NE 180, and at least one UE Xn Application Protocol (XnAP) ID associated with the at least one MT of IAB node 160 at the at least one CU of source NE 180.

In a variant of step 101, the at least one RRC command sent to the at least one MT of IAB node 160, may instead be a F1AP message sent to at least one DU_a of IAB node 160, wherein the at least one DU_a may indicate to the at least one DU_b of IAB node 160 to initiate at least one F1 setup procedure. In some embodiments, the at least one F1AP message sent to DU_a may comprise one or more of at least one global next generation-radio access network (NG-RAN) node identification (ID) associated with the at least one CU of source NE 180, and at least one UE Xn Application Protocol (XnAP) ID associated with the at least one MT of IAB node 160 at the at least one CU of source NE 180.

In step 103, at least one internet protocol (IP) address may be assigned for at least one DU (DU_b) of IAB node 160. In step 105, based upon F1 application protocol (F1AP), IAB node 160, such as by the at least one DU_b of IAB node 160, may transmit at least one F1 setup request to CU (CU2) of target NE 170, for example, via at least one DU (DU1) of source NE 180. In certain embodiments, the at least one F1 setup request may comprise one or more of the at least one NG-RAN node ID and the at least one UE XnAP ID. The at least one DU of source NE 180 may forward the at least one F1 setup request to target NE 170, for example, at least one CU of target NE 170. In step 107, target NE 170, for example, the at least one CU of target NE 170, may transmit at least one F1AP F1 setup response to the at least one DU (DU_b) of the IAB node 160, for example, via the at least one DU of source NE 180.

In step 109, IAB node 160, for example, the at least one MT of IAB node 160, may transmit at least one RRC measurement report to source NE 180, for example, the at least one CU of source NE 180. In some embodiments, at least one DU of source NE 180 may forward the at least one RRC measurement report to the at least one CU of source NE 180.

In step 111, source NE 180, for example, the at least one CU of source NE 180, may transmit at least one handover request associated with the at least one MT of IAB node 160 to target NE 170, for example, the at least one CU of target NE 170. In step 113, target NE 170, such as the at least one CU of target NE 170, may associate the at least one MT of IAB node 160 with at least one DU_b of IAB node 160 based upon the at least one UE XnAP ID and/or at least one F1 setup. In step 115, the at least one CU of target NE 170 may transmit at least one F1AP UE context setup request to the at least one DU of target NE 170.

In step 117, the at least one DU (DU2) of target NE 170 may transmit at least one F1AP UE context setup response to the at least one CU (CU2) of target NE 170. In step 119, the at least one CU of target NE 170 may transmit at least one handover acknowledgement associated with the at least one MT of IAB node 160 to the at least one CU (CU1) of source NE 180. In step 121, the at least one CU (CU1) of source NE 180 may transmit at least one RRC reconfiguration message to the at least one DU of source NE 180, which may forward the at least one RRC reconfiguration message to IAB node 160, for example, the at least one MT of IAB node 160.

In step 123, the at least one MT of IAB node 160 may synchronize to transmissions of the at least one DU of target NE 170. In step 125, the at least one MT of IAB node 160 may transmit at least one RRC reconfiguration complete message to the at least one DU of target NE 170, which may forward the at least one RRC reconfiguration complete message to the at least one CU of target NE 170. Furthermore, at least one IP route may be updated for the at least one CU (CU1) of source NE 180 to reach at least one DU (DU_a) of IAB node 160. In addition, at least one radio cell associated with the at least one DU_b of IAB node 160 may be activated.

In step 127, the at least one CU of target NE 170 may transmit at least one F1AP UE context setup request to the at least one DU of target NE 170, which may forward the at least one F1AP UE context setup request to the at least one MT of IAB node 160, which may further forward the at least one F1AP UE context setup request to the at least one DU_b of IAB node 160. The at least one F1AP UE context setup request to the at least one DU (DU b) of IAB node 160 may be sent as response to HO request for UE(s) received in step 111. In step 129, the at least one DU_b of IAB node 160 may transmit at least one F1AP UE context setup response to the at least one MT of IAB node 160, which may forward the at least one F1AP UE context setup response to the at least one DU of target NE 170, which may further forward the at least one F1AP UE context setup response to the at least one CU of target NE 170. In step 131, target NE 170, for example, the at least one CU of target NE 170, may transmit at least one handover acknowledgement associated with UE 150 to source NE 180, for example, the at least one CU of source NE 180.

In step 133, source NE 180, for example, the at least one CU of source NE 180, may transmit at least one F1AP UE context modification message to target NE 170, for example, the at least one DU of target NE 170, which may forward the at least one F1AP UE context modification message to IAB node 160, for example, the at least one MT of IAB node 160, which may further forward the at least one F1AP UE context modification message to the at least one DU_a of IAB node 160. In step 135, IAB node 160, for example, the at least one DU_a of IAB node 160, may transmit at least one RRC reconfiguration for UE 150 to handover to the at least one DU_b of IAB node 160. In step 137, UE 150 may synchronize to transmissions of the at least one DU_b of IAB node 160. In step 139, UE 150 may transmit at least one RRC reconfiguration complete message to IAB node 160, for example, the at least one DU_a and/or the at least one DU_b of IAB node 160.

In step 141, the at least one DU_b of IAB node 160 may submit at least one F1AP uplink message transfer message to the at least one MT of IAB node 160, which may transmit the at least one F1AP uplink message transfer message to the at least one DU of target NE 170, which may further forward the at least one F1AP uplink message transfer message to the at least one CU of target NE 170. In some embodiments, the at least one F1AP uplink message transfer message may carry the RRC reconfiguration complete message from UE 150.

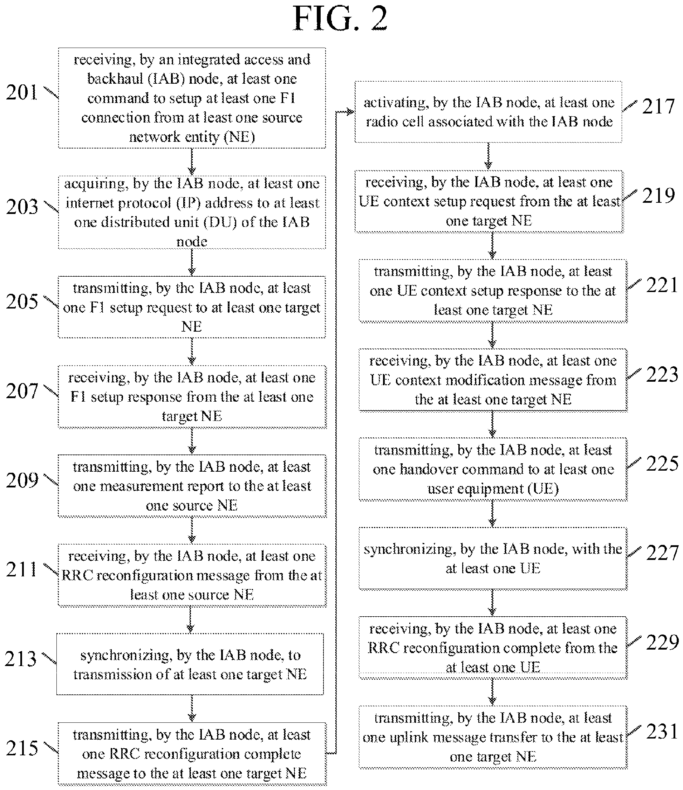

FIG. 2 illustrates an example of a flowchart of a method that may be performed by an IAB node, such as NE 520 illustrated in FIG. 5, according to certain embodiments. In step 201, the IAB node may receive from at least one source NE, which may be similar to NE 520 illustrated in FIG. 5, at least one RRC command to setup at least one F1 connection. For example, the at one RRC command may be transmitted by at least one centralized unit (CU) of the source NE, and may be transmitted through at least one distributed unit (DU) of the source NE. Additionally or alternatively, the at least one RRC command may be received by at least one mobile termination (MT) function of the IAB node. In some embodiments, the at least one RRC command may comprise one or more of at least one global NG-RAN node ID associated with the at least one CU of the source NE and at least one UE XnAP ID associated with the at least one MT of the IAB node at the at least one CU of the source NE. Furthermore, the IAB node and source NE may be in communication via at least one connection, for example, at least one general packet radio service tunneling protocol - user (GTP-U) connection.

In step 203, the IAB node may acquire at least one IP address to at least one DU_b of the IAB node. In step 205, based upon F1 application protocol (F1AP), the IAB node may transmit at least one F1 setup request to at least one target NE. In certain embodiments, the at least one F1 setup request may comprise one or more of the at least one NG-RAN node ID and the at least one UE XnAP ID.

In response, in step 207, the IAB node may receive at least one F1 setup response from the at least one target NE. In step 209, the IAB node may transmit at least one measurement report to the at least one source NE. In some embodiments, the at least one DU of the source NE may forward the at least one RRC measurement report to the at least one CU of the source NE. In step 211, the IAB node may receive at least one RRC reconfiguration message from the at least one source NE, and in step 213, the IAB node may synchronize to transmission of at least one target NE. In step 215, the IAB node may transmit at least one RRC reconfiguration complete message to the at least one target NE. In step 217, the IAB node may activate at least one radio cell associated with the IAB node.

In step 219, the IAB node may receive at least one UE context setup request from the at least one target NE. In step 221, the IAB node may transmit at least one UE context setup response to the at least one target NE. In step 223, the IAB node may receive at least one UE context modification message from the at least one target NE. In step 225, the IAB node may transmit at least one handover command to at least one user equipment. In step 227, the IAB node may synchronize with the at least one UE. In step 229, the IAB node may receive at least one RRC reconfiguration complete from the at least one UE. In step 231, the IAB node may transmit at least one uplink message transfer to the at least one target NE.

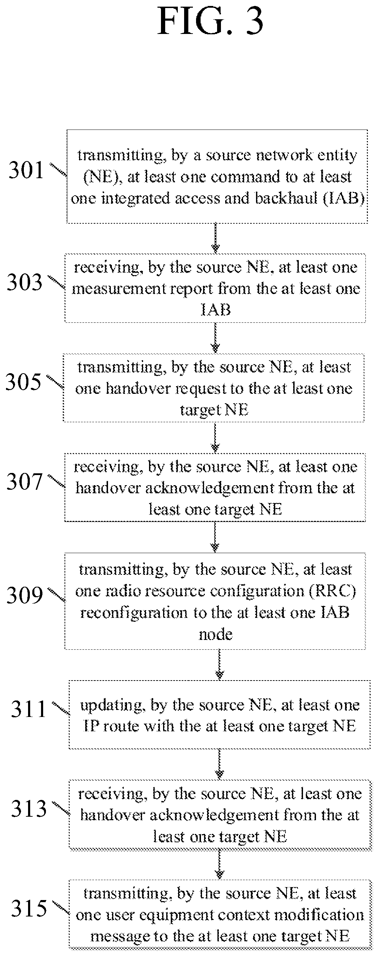

FIG. 3 illustrates an example of a flowchart of a method that may be performed by a source network entity, such as NE 520 illustrated in FIG. 5, according to certain embodiments. In step 301, the source NE may transmit at least one command to setup at least one F1 connection to at least one IAB node, such as NE 520 illustrated in FIG. 5. In step 303, the source NE may receive at least one measurement report from the at least one IAB node. In step 305, the source NE may transmit at least one handover request to the at least one target NE. In step 307, the source NE may receive at least one handover acknowledgement from the at least one target NE. In step 309, the source NE may transmit at least one RRC reconfiguration to the at least one IAB node. In step 311, the source NE may update at least one IP route with the at least one target NE. In step 313, the source NE may receive at least one handover acknowledgement from the at least one target NE. In step 315, the source NE may transmit at least one UE context modification message to the at least one target NE.

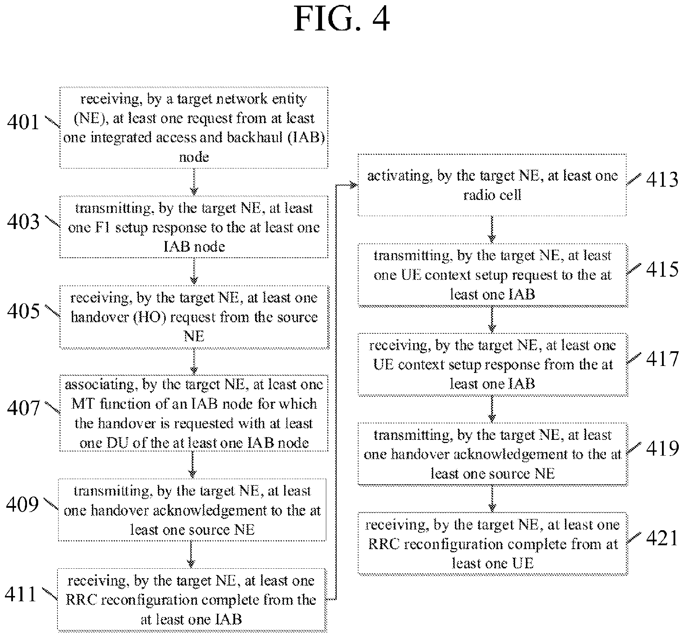

FIG. 4 illustrates an example of a flowchart of a method that may be performed by a target network entity, such as NE 520 illustrated in FIG. 5, according to certain embodiments. In step 401, the target NE may receive at least one F1 setup request from at least one IAB node, which may be similar to NE 520 illustrated in FIG. 5. In step 403, the target NE may transmit at least one F1 setup response to the at least one IAB node. In step 405, the target NE may receive at least one handover (HO) request from the source NE. In step 407, the target NE may associate at least one MT function of an IAB node for which the handover is requested with at least one DU of the at least one IAB node.

In step 409, the target NE may transmit at least one handover acknowledgement to the at least one source NE. In step 411, the target NE may receive at least one RRC reconfiguration complete from the at least one IAB node. In step 413, the target NE may activate at least one radio cell. In step 415, the target NE may transmit at least one UE context setup request to the at least one IAB node. In step 417, the target NE may receive at least one UE context setup response from the at least one IAB node. In step 419, the target NE may transmit at least one handover acknowledgement to the at least one source NE. In step 421, the target NE may receive at least one RRC reconfiguration complete from at least one UE.

FIG. 5 illustrates an example of a system according to certain embodiments. In one embodiment, a system may include multiple devices, such as, for example, user equipment 510 and network entity 520.

UE 510 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof.

Network entity 520 may be one or more of a base station, such as an evolved node B (eNB) or next generation node B (gNB), a next generation radio access network (NG RAN), a serving gateway, a server, and/or any other access node or combination thereof. One or more of these devices may include at least one processor, respectively indicated as 511 and 521. At least one memory may be provided in one or more of devices indicated at 512 and 522. The memory may be fixed or removable. The memory may include computer program instructions or computer code contained therein. Processors 511 and 521 and memory 512 and 522 or a subset thereof, may be configured to provide means corresponding to the various blocks of FIGS. 1-4. Although not shown, the devices may also include positioning hardware, such as global positioning system (GPS) or micro electrical mechanical system (MEMS) hardware, which may be used to determine a location of the device. Other sensors are also permitted and may be included to determine location, elevation, orientation, and so forth, such as barometers, compasses, and the like.

As shown in FIG. 5, transceivers 513 and 523 may be provided, and one or more devices may also include at least one antenna, respectively illustrated as 514 and 524. The device may have many antennas, such as an array of antennas configured for multiple input multiple output (MIMO) communications, or multiple antennas for multiple radio access technologies. Other configurations of these devices, for example, may be provided.

Transceivers 513 and 523 may be a transmitter, a receiver, or both a transmitter and a receiver, or a unit or device that may be configured both for transmission and reception. Processors 511 and 521 may be embodied by any computational or data processing device, such as a central processing unit (CPU), application specific integrated circuit (ASIC), or comparable device. The processors may be implemented as a single controller, or a plurality of controllers or processors.

Memory 512 and 522 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory and which may be processed by the processors may be any suitable form of computer program code, for example, a compiled or interpreted computer program written in any suitable programming language. Memory may be removable or non-removable.

The memory and the computer program instructions may be configured, with the processor for the particular device, to cause a hardware apparatus such as user equipment to perform any of the processes described below (see, for example, FIGS. 1-4). Therefore, in certain embodiments, a non-transitory computer-readable medium may be encoded with computer instructions that, when executed in hardware, perform a process such as one of the processes described herein. Alternatively, certain embodiments may be performed entirely in hardware.

In certain embodiments, an apparatus may include circuitry configured to perform any of the processes or functions illustrated in FIGS. 1-4. For example, circuitry may be hardware-only circuit implementations, such as analog and/or digital circuitry. In another example, circuitry may be a combination of hardware circuits and software, such as a combination of analog and/or digital hardware circuit(s) with software or firmware, and/or any portions of hardware processor(s) with software (including digital signal processor(s)), software, and at least one memory that work together to cause an apparatus to perform various processes or functions. In yet another example, circuitry may be hardware circuit(s) and or processor(s), such as a microprocessor(s) or a portion of a microprocessor(s), that include software, such as firmware for operation. Software in circuitry may not be present when it is not needed for the operation of the hardware..

The features, structures, or characteristics of certain embodiments described throughout this specification may be combined in any suitable manner in one or more embodiments. For example, the usage of the phrases "certain embodiments," "some embodiments," "other embodiments," or other similar language, throughout this specification refers to the fact that a particular feature, structure, or characteristic described in connection with the embodiment may be included in at least one embodiment of the present invention. Thus, appearance of the phrases "in certain embodiments," "in some embodiments," "in other embodiments," or other similar language, throughout this specification does not necessarily refer to the same group of embodiments, and the described features, structures, or characteristics may be combined in any suitable manner in one or more embodiments.

One having ordinary skill in the art will readily understand that certain embodiments discussed above may be practiced with steps in a different order, and/or with hardware elements in configurations which are different than those which are disclosed. Therefore, it would be apparent to those of skill in the art that certain modifications, variations, and alternative constructions would be apparent, while remaining within the spirit and scope of the invention. In order to determine the metes and bounds of the invention, therefore, reference should be made to the appended claims.

| Partial | Glossary |
|---|---|
| 3GPP | 3rd Generation Partnership Project |
| BAP | Backhaul Adaptation Protocol |
| CGI | Cell Global Identity |
| CU | Centralized Unit |
| DU | Distributed Unit |
| eMBB | Enhanced Mobile Broadband |
| eNB | Evolved Node B |
| EPC | Evolved Packet Core |
| EPS | Evolved Packet System |
| gNB | Next Generation eNB |
| GPS | Global Positioning System |
| GSM | Global System for Mobile Communications |
| GTP-U | General Packet Radio Service Tunneling Protocol - User Plane |
| IAB | Integrated Access and Backhaul |
| IP | Internet Protocol |
| LTE | Long-Term Evolution |
| MME | Mobility Management Entity |
| MT | Mobile Termination |
| MTC | Machine-Type Communications |
| NAS | Non-Access Stratum |
| NR | New Radio |
| PCI | Physical Cell Identity |
| RAN | Radio Access Network |
| RRC | Radio Resource Control |
| UE | User Equipment |
| URLLC | Ultra-Reliable and Low-Latency Communication |
| WLAN | Wireless Local Area Network |

According to a first embodiment, a method may include transmitting, by a source network entity, at least one command to at least one integrated access and backhaul node. The method may further include transmitting at least one handover request to a target network entity.

In some variants, the method may further include forwarding, by the source network entity, at least one F1 setup request from the at least one integrated access and backhaul node.

In some variants, the method may further include, forwarding, by the source network entity, at least one F1 setup response from the target network entity.

In some variants, the at least one command may be a radio resource control (RRC) command.

In some variants, the at least one command may be a F1 application protocol (F1AP) message.

In some variants, the at least one command may be a F1AP message sent to at least one DU_a of the at least one IAB node.

In some variants, the at least one command may instruct the at least one integrated access and backhaul node to set up at least one F1 interface.

In some variants, the at least one command may comprise one or more of at least one global next generation-radio access network (NG-RAN) node identification (ID) associated with the source network entity and at least one user equipment Xn application protocol identifier associated with at least one mobile termination of the integrated access and backhaul node at the source network entity.

In some variants, the at least one handover request to the target network entity may comprise at least one user equipment Xn application protocol identifier associated with at least one mobile termination of the integrated access and backhaul node at the source network entity.

According to a second embodiment, a method may include receiving, by a target network entity, at least one message from an integrated access and backhaul node. The method may further include receiving at least one handover request. The method may further include associating, based on the at least one message and the at least one handover request, by the target network entity, at least one mobile termination of at least one integrated access and backhaul node with at least one distributed unit of the at least one integrated access and backhaul node.

In some variants, the at least one message may be an F1 setup request.
In some variants, the method may further include transmitting at least one response to the integrated access and backhaul node.

In some variants, at least one response to the at least one message may be an F1 setup response.

In some variants, the at least one message may comprise one or more of at least one global next generation-radio access network (NG-RAN) node identification (ID) associated with the source network entity and at least one user equipment Xn application protocol identifier associated with the at least one mobile termination of the integrated access and backhaul node at the source network entity.

In some variants, the at least one handover request may comprise the at least one user equipment Xn application protocol identifier associated with the at least one mobile termination of the integrated access and backhaul node at the source network entity.

In a variant, the at least one F1 setup response may comprise at least one indication that no cells are to be activated yet.

In a variant, the associating may be based upon combining information received in the at least one message and in the at least one handover request.

In a variant, the information may comprise one or more of the at least one user equipment Xn application protocol identifier and the at least one global next generation-radio access network (NG-RAN) node identification (ID).

According to a third embodiment, a method may include receiving, by an integrated access and backhaul node, at least one command. The method may further include transmitting, by the integrated access and backhaul node, at least one message.

In some variants, the at least one command may be a radio resource control (RRC) command.

In some variants, the at least one command may be a F1 application protocol (F1AP) message.

In some variants, the at least one command may be a F1AP message sent to at least one distributed unit (DU a) of the at least one integrated access and backhaul node.

In some variants, the at least one command may comprise one or more of at least one global next generation-radio access network (NG-RAN) node identification (ID) associated with a source network entity and at least one user equipment Xn application protocol identifier associated with at least one mobile termination of the integrated access and backhaul node at the source network entity.

In some variants, the at least one message may comprise the one or more of at least one NG-RAN node ID associated with the source network entity and the at least one user equipment Xn application protocol identifier.

In some variants, the command may instruct the integrated access and backhaul node to set up at least one F1 interface.

In some variants, the at least one message may be an F1 setup request.

In some variants, the method may further include receiving at least one response.

In some variants, the at least one response may be an F1 setup response.

In a variant, the at least one F1 setup response may comprise at least one indication that no cells are to be activated yet.

According to a fourth embodiment, a fifth embodiment, and a sixth embodiment, an apparatus can include at least one processor and at least one memory and computer program code. The at least one memory and the computer program code can be configured to, with the at least one processor, cause the apparatus at least to perform a method according to the first embodiment, the second embodiment, the third embodiment, and any of their variants.

According to a seventh embodiment, an eighth embodiment, and a ninth embodiment, an apparatus can include means for performing the method according to the first embodiment, the second embodiment, the third embodiment, and any of their variants.

According to a tenth embodiment, an eleventh embodiment, and a twelfth embodiment, a computer program product may encode instructions for performing a process including a method according to the first embodiment, the second embodiment, the third embodiment, and any of their variants.

According to a thirteenth embodiment, a fourteenth embodiment, and a fifteenth embodiment, a non-transitory computer-readable medium may encode instructions that, when executed in hardware, perform a process including a method according to the first embodiment, the second embodiment, the third embodiment, and any of their variants.

According to a sixteenth embodiment, a seventeenth embodiment, and an eighteenth embodiment, a computer program code may include instructions for performing a method according to the first embodiment, the second embodiment, the third embodiment, and any of their variants.

According to a nineteenth embodiment, a twentieth embodiment, and a twenty-first embodiment, an apparatus may include circuitry configured to perform a process including a method according to the first embodiment, the second embodiment, the third embodiment, and any of their variants.

## Claims

1. An apparatus for a source network entity, the apparatus comprising:
means for transmitting at least one command to at least one integrated access and backhaul node wherein the at least one command instructs the at least one integrated access and backhaul node to set up at least one F1 interface with a target network entity; and
means for transmitting at least one handover request to the target network entity to handover the integrated access and backhaul node to the target network entity.

2. The apparatus according to claim 1, wherein the at least one command is a radio resource control command or an F1 application protocol message.

3. The apparatus according to claim 1 or 2, wherein the at least one command is an F1 application protocol message sent to at least one distributed unit of the at least one integrated access and backhaul node.

4. The apparatus according to any one of claims 1-3, further comprising:
means for forwarding at least one setup request from the at least one integrated access and backhaul node to the target network entity; and
means for forwarding at least one setup response from the target network entity to the at least one integrated access and backhaul node.

5. The apparatus according to any one of claims 1-4, wherein the at least one command comprises one or more of at least one global next generation-radio access network node identification associated with the apparatus and at least one user equipment Xn application protocol identifier associated with at least one mobile termination of the integrated access and backhaul node at the apparatus.

6. The apparatus according to any one of claims 1-5, wherein the at least one handover request to the target network entity comprises at least one user equipment Xn application protocol identifier associated with at least one mobile termination of the integrated access and backhaul node at the apparatus.

7. An apparatus for a target network entity, the apparatus comprising:
means for receiving at least one message from an integrated access and backhaul node;
means for receiving at least one handover request from a source network entity; and
means for associating, based on the at least one message and the at least one handover request, at least one mobile termination of at least one integrated access and backhaul node with at least one distributed unit of the at least one integrated access and backhaul node.

8. The apparatus according to claim 7, wherein the at least one message comprises one or more of at least one global next generation-radio access network node identification associated with the source network entity and at least one user equipment Xn application protocol identifier associated with the at least one mobile termination of the integrated access and backhaul node at the source network entity.

9. The apparatus according to claim 7 or 8, wherein the at least one handover request comprises at least one user equipment Xn application protocol identifier associated with the at least one mobile termination of the integrated access and backhaul node at the source network entity.

10. The apparatus according to any one of claims 7-9, further comprising:
means for transmitting at least one response to the integrated access and backhaul node wherein the at least one response comprises at least one indication that no cells are to be activated yet.

11. An apparatus for an integrated access and backhaul node, the apparatus comprising:
means for receiving at least one command wherein the at least one command causes the apparatus to set up at least one F1 interface with a target network entity;
means for transmitting at least one set up message addressed to the target network entity to set up the F1 interface; and
means for receiving at least one set up response from the target network entity.

12. The apparatus according to claim 11, wherein the at least one command is a radio resource control command or an F1 application protocol message.

13. The apparatus according to claim 11 or 12, wherein the at least one command is an F1 application protocol message sent to at least one distributed unit of the apparatus.

14. The apparatus according to any one of claims 11-13, wherein the at least one command comprises one or more of at least one global next generation-radio access network node identification associated with a source network entity and at least one user equipment Xn application protocol identifier associated with at least one mobile termination of the apparatus at the source network entity.

15. The apparatus according to any one of claims 11-14, wherein the at least one set up message comprises one or more of at least one global next generation-radio access network node identification associated with the source network entity and at least one user equipment Xn application protocol identifier.
